# EUROPEAN PATENT APPLICATION

(11) **EP 4 174 033 A1**
(43) Date of publication of application: **03.05.2023**
(21) Application number: 21833983.6
(22) Date of filing: 29.06.2021
(51) Int. Cl.: C02F 1/02, C02F 1/44, A23L 2/38

(54) **STERILIZATION SYSTEM AND STERILIZATION METHOD FOR POTABLE WATER**

(30) Priority: 30.06.2020 JP 2020113487
(71) Applicant: Suntory Holdings Limited, Osaka 530-8203 (JP)
(72) Inventor: MIZOGUCHI, Kotaro, Omachi-shi, Nagano 398-0004 (JP); IDO, Yoshihiro, Kawasaki-shi, Kanagawa 211-0067 (JP); UETA, Etsuko, Kawasaki-shi, Kanagawa 211-0067 (JP); YUKI, Katsuya, Kawasaki-shi, Kanagawa 211-0067 (JP); SAKAMOTO, Junki, Kawasaki-shi, Kanagawa 211-0067 (JP); TAKAHASHI, Tokio, Soraku-gun, Kyoto 619-0284 (JP); OKUMURA, Kakuji, Kawasaki-shi, Kanagawa 211-0067 (JP); KIDA, Wataru, Soraku-gun, Kyoto 619-0284 (JP)
(74) Representative: Vossius & Partner Patentanwälte Rechtsanwälte mbB
(86) International application number: PCT/JP2021/024618
(87) International publication number: WO 2022/004743

(57) **Abstract**

A drinking water purification system and purification method able to reduce an amount of emission of carbon dioxide. A purification system 50 comprises a heating apparatus 7 for heating water to a predetermined temperature of 55°C or more and less than 100°C and a filter 8 for purifying the water heated by the heating apparatus 7.

## Description

### FIELD

The present application relates to a drinking water purification system and purification method.

### BACKGROUND

In the past, various methods have been proposed for purifying and sterilizing water and other liquids. For example, PTL 1 discloses a system for purifying a liquid product (for example, drinking water) and filling the liquid product in plastic containers. This system is comprised of a purification apparatus for sterilizing a liquid product, an aseptic tank for temporarily storing the liquid product run through the purification apparatus, and a filler for filling the liquid product in plastic containers. In the purification apparatus, UHT (Ultra High Temperature) sterilization is used to sterilize the liquid product. In general, in UHT sterilization, for example, a 120°C or more ultrahigh temperature is used. As literature relating to the production of water other than for drinking use, PLT 2 discloses a method of production and a production apparatus for purified water used for pharmaceuticals etc. This production apparatus uses a deionization apparatus having a reverse osmosis membrane (RO membrane) and electrodeionization apparatus (EDI apparatus), In front of the RO membrane, a microfiltration membrane (MF membrane) is placed as a security filter for preventing clogging of the RO membrane. The water run through the MF membrane, RO membrane, and EDI apparatus is heated by a heat exchanger to 50°C or more.

### [CITATIONS LIST]

### [PATENT LITERATURE]

[PTL 1] Japanese Unexamined Patent Publication No. 2017-214134
[PTL 2] Japanese Patent No. 5336926

### SUMMARY OF INVENTION

### [TECHNICAL PROBLEM]

In the purification of drinking water, in the UHT sterilization of PTL 1, a large amount of energy has to be used for heating the liquid at an ultrahigh temperature. This can lead to the emission of a large amount of carbon dioxide. Further, PLT 2 relates to the production of purified water, but may be unsuitable or excessive for the production of drinking water.

In consideration of the above such problem, the present invention has as its object the provision of a drinking water purification system and purification method able to reduce the amount of emission of carbon dioxide.

### [SOLUTION TO PROBLEM]

One aspect of the present disclosure is a purification system for purifying drinking water in an aseptic filling system. The system is comprised of a heating apparatus for heating water to a predetermined temperature of 55°C or more and less than 100°C and a filter for purifying the water heated by the heating apparatus.

In the purification system according to one aspect of the present disclosure, a filter is used for purification of the water. However, for example, if a filter is used over a long period of time, a biofilm is formed at the filter whereby the filter itself becomes a source of contamination, bacteria ends up flowing downstream, clogging occurs, and other inconveniences may conceivably arise. The inventors researched this and as a result discovered that by running water heated to a predetermined temperature of 55°C or more and less than 100°C through a filter, it is possible to inhibit the formation of a biofilm in the filter over a long period of time and to continuously purify water over a constant time period. In this case, since the water is heated to less than 100°C, it is possible to decrease the amount of emission of carbon dioxide compared with UHT sterilization.

The purification system may further comprise a holding means for holding the temperature of the water purified by the filter for a predetermined time. In this case, since the water is maintained for a while at a high temperature (55°C or more and less than 100°C) downstream of the filter, the water downstream from the filter can be further purified.

Another aspect of the present disclosure is a purification method for purifying drinking water in an aseptic filling system. The method includes heating water to a predetermined temperature of 55°C or more and less than 100°C and running the heated water through a filter to purify the water. According to this purification method, due to similar reasons as the above, the amount of emission of carbon dioxide can be reduced.

The purification method may further include holding the temperature of the water purified by the filter for a predetermined time. In this case, due to similar reasons as the above, the water downstream of the filter can be further purified.

### [ADVANTAGEOUS EFFECTS OF INVENTION]]

According to the present disclosure, it is possible to provide a drinking water purification system and purification method able to reduce the amount of emission of carbon dioxide.

### BRIEF DESCRIPTION OF DRAWINGS

FIG. 1 is a schematic view showing a drinking water purification system according to one embodiment.
FIG. 2 shows the results of bacteria culture tests.
FIG. 3 is a flow chart showing a drinking water purification method according to one embodiment.

### DESCRIPTION OF EMBODIMENTS

Below, referring to the attached drawings, a water purification system and purification method according to an embodiment will be explained.

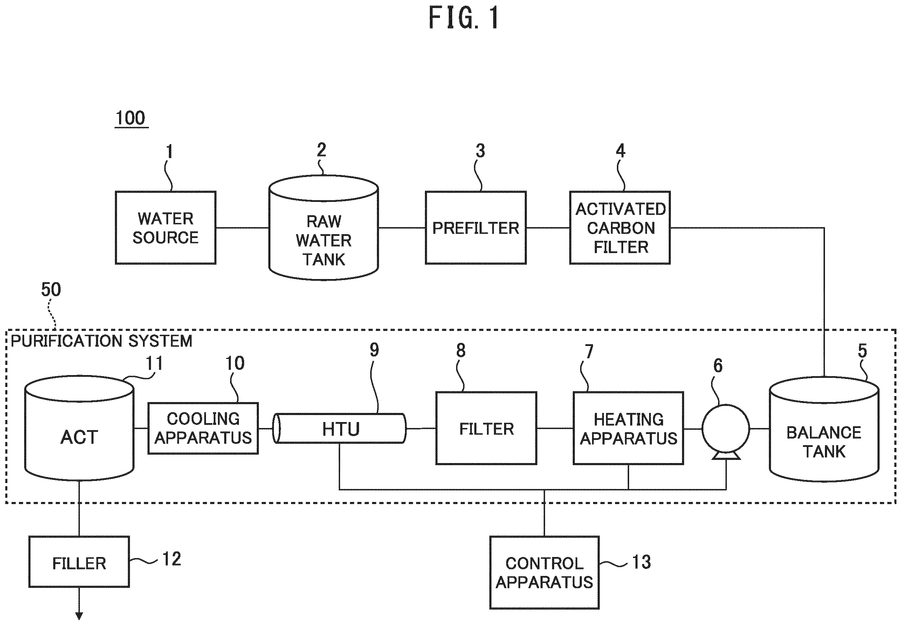

FIG. 1 is a schematic view showing a drinking water purification system 50 according to one embodiment. In the present embodiment, the purification system 50 is applied to an aseptic filling system 100 of water (for example, natural spring water) to be filled in plastic bottles (for example, PET bottles). Note that, the purification system of the present disclosure can be applied to purification of various types of drinking water besides natural spring water (for example, water for dilution of soft drinks etc.). Further, it should be noted that "plastic bottles" can mean bottles made of plastic such as polyethylene terephthalate (PET), polypropylene (PP), and polyethylene (PE) and is not limited to PET bottles. Further, the containers in which the water is filled are not limited to plastic bottles and may also be metal cans, glass bottles, or other containers. In the aseptic filling system 100, water obtained from a water source 1 (for example, a well) is run through one or more processes of purification etc. and filled in PET bottles at a filler 12. Such an aseptic filling system 100 is comprised of a water source 1, raw water tank 2, prefilter 3, activated carbon filter 4, purification system 50, filler 12, and control apparatus 13. The aseptic filling system 100 may also further comprise other component elements.

The water (raw water) obtained from the water source 1 is stored in the raw water tank 2. Water from the raw water tank 2 is run through the prefilter 3. The prefilter 3, for example, removes impurities from the water. Note that the aseptic filling system 100 may further comprise one or more prefilters at other locations. The water is further run through the activated carbon filter 4. The activated carbon filter 4, for example, removes impurities (for example, organic matter) which could not be removed from the water at the prefilter 3 and/or removes odor from the water. The water is purified by passing it through the purification system 50 (explained in detail later). The purified water is next filled in plastic bottles at the filler 12.

The control apparatus 13 is connected with several component elements of the aseptic filling system 100 to be able to communicate with them and is configured to control these several elements. The control apparatus 13, for example, can be a PC, note PC, tablet type PC, or other various computers. The control apparatus 13, for example, can include a processor, memory device, display device, input device, interface, and other component elements. Note that, the control apparatus 13 may also be built into the purification system 50 as part of the purification system 50.

Next, the purification system 50 will be explained.

The inventors came up with the idea of using a filter to decrease the amount of emission of carbon dioxide discharged due to the disinfection or purification of the water. However, for example, if a filter is used for a long period of time, conceivably a biofilm (consortium of bacteria) may form at the filter and bacteria may end up flowing downstream of the filter. The inventors researched this and as a result discovered that by running through a filter the water which has been heated up to a certain extent of temperature lower than UHT sterilization, it is possible to inhibit the formation of a biofilm at the filter and possible to continue to purify water over a predetermined time period.

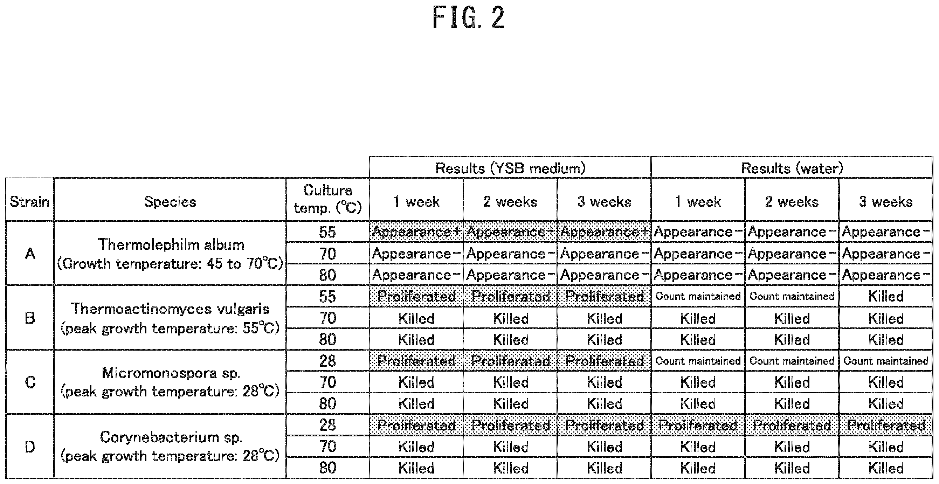

FIG. 2 shows the results of bacteria culture tests. The inventors conducted experiments so as to investigate up to what extent of temperature water has to be heated in order to inhibit the formation of a biofilm at a filter. Specifically, the strains A to D shown in FIG. 2 were added to media and water in test tubes and stationarily cultured at the temperatures shown in FIG. 2 for one week to three weeks. The strains A to D are known to be able to proliferate even at relatively high temperatures. Note that, the water runs through the purification system 50 and does not dwell in the purification system 50, but the formation of a biofilm at the "filter" which is at a specific position is focused on, so the media and water in the test tubes can be used for evaluation. The media were prepared by mixing yeast extract 2 g, soluble starch 10 g, and ion exchange water 1000 ml, using 1N HCL or 1N NaOH to adjust the pH of the mixture to 7.3 to 7.5, and further sterilizing the mixture by high pressure steam (121°C for 20 minutes). For the water, *Minami Arupusu no Tennensui* (registered trademark) available from Japan's Suntory Foods International Co., Ltd. was used. The strains were evaluated for count. The strain A could not be cultured in an agar medium, so the strain A was judged for proliferation of bacteria by the appearance (turbidity) ("+" shows proliferation and "-" shows no proliferation).

Viewing the results with the media and water of the strains A to D at 70°C and 80°C, proliferation was not observed for both the media and water. As explained above, the strains A to D are known to be able to proliferate even at relatively high temperatures, so it is considered that if heating water up to 70°C, almost all of the bacteria able to proliferate in water can be killed and formation of a biofilm can be reliably inhibited.

Further, if referring to the results at 55°C for the strain A, proliferation was observed with a medium in which proliferation of bacteria is promoted, but proliferation was not observed with water. Therefore, it is learned that with the strain A, proliferation can be inhibited if being heated in water up to 55°C. Therefore, it is learned that if heating water up to 55°C, proliferation of the strain A can be inhibited and formation of a biofilm can also be inhibited.

Similarly, if referring to the results at 55°C for the strain B, proliferation was observed with a medium in which proliferation of bacteria is promoted, but the maintenance of count or killing was observed with water. Note that, if at least the bacteria does not "proliferate" (that is, if the count is maintained), formation of a biofilm can be inhibited and the bacteria can be reliably removed at the film. Therefore, it is learned that with the strain B, proliferation can be inhibited if being heated in water up to 55°C. Further, if referring to the results at 55°C in water for the strain B, the count was maintained for two weeks, while killing was observed at three weeks. From this as well, it is learned that with the strain B, the vicinity of 55°C is the temperature at which proliferation can be inhibited in water. Therefore, it is learned that if heating water up to 55°C, proliferation of the strain B can be inhibited and formation of a biofilm can also be inhibited.

Regarding the strains C and D, as shown in FIG. 2, the peak growth temperatures of the strains C and D are lower than the peak growth temperatures of the strains A and B, so for the strains C and D, it is believed that proliferation can be inhibited more if setting the temperatures higher. Therefore, it is believed that for the strains C and D, if heating water up to 55°C, proliferation can be sufficiently inhibited. From the above, it is believed that if heating water up to 55°C, proliferation can be inhibited for substantially all bacteria able to proliferate in water and that formation of a biofilm can be inhibited. In this case, for the purpose of purification of drinking water, water can be sufficiently purified without using a reverse osmosis membrane (RO membrane) and EDI (Electro DeIonization) apparatus or other excessive apparatus, but by heating the water and using a filter having a pore size of an extent able to remove bacteria.

Regarding the upper limit of the heating temperature, as explained above, at 70°C and 80°C, proliferation was not observed in both media and water for all of the strains A to D. Further, as shown below, as the heating apparatus 7, for example, a boiler is used. If making the heating temperature of the water 100°C or more, a greater amount of fuel is required to generate the higher pressure steam. Therefore, the heating temperature of the water is preferably less than 100°C.

Referring to FIG. 1, based on the above such findings, the purification system 50 of the present disclosure comprises a balance tank 5, a pump 6, a heating apparatus 7, a filter 8, a holding tube unit (HTU, holding means) 9, a cooling apparatus 10, and an aseptic tank (ACT) 11. The purification system 50 may further comprise other component elements (for example, temperature sensors etc. placed at predetermined positions (for example, the heating apparatus 7, filter 8, HTU 9, and/or between them)).

The balance tank 5 stores water which has been run through the activated carbon filter 4. The pump 6 sends the desired amount of water from the balance tank 5 to the heating apparatus 7. The pump 6 may be controlled by the control apparatus 13. Note that, the aseptic filling system 100 may be further comprised of one or more pumps at other locations.

The heating apparatus 7 heats the water to a predetermined temperature of 55°C or more and less than 100°C (for example, 60°C or more and 80°C or less, preferably 70°C or more and 80°C or less) for a predetermined time. The heating temperature at the heating apparatus 7 may, for example, be determined in accordance with the heating time at the heating apparatus 7 (or the heating time at the heating apparatus 7 may be determined in accordance with the heating temperature at the heating apparatus 7). If the heating time at the heating apparatus 7 is long, the heating temperature may be low. If the heating time is short, the heating temperature must be high. The heating temperature at the heating apparatus 7 may, for example, be determined in accordance with the temperature holding time at the HTU 9 (or the temperature holding time at the HTU 9 may be determined in accordance with the heating temperature at the heating apparatus 7). If the temperature holding time at the HTU 9 is long, the heating temperature at the heating apparatus 7 may be low. If the temperature holding time at the HTU 9 is short, the heating temperature at the heating apparatus 7 must be high. The heating time at the heating apparatus 7 can, for example, be tens of milliseconds, hundreds of milliseconds, seconds, ten odd seconds, tens of seconds, or minutes. The heating apparatus 7, for example, may be a boiler (for example, a gas-fired boiler). The heating apparatus 7 may also be another type of heating apparatus (for example, an electric heater, heat pump, etc.) For example, the temperature of the water at the heating apparatus 7 may be controlled by the control apparatus 13 by a closed loop.

The filter 8 purifies the water. The filter 8, for example, may be a membrane filter. To purify water, the pore size of the filter 8 (filtration precision) has to be 0.45 µm or less (for example, 0.1 µm or more and 0.45 µm or less).

The HTU 9 holds the water purified by the filter 8 at a predetermined temperature for a predetermined time. The HTU 9, for example, can include a serpentine winding piping and a heat exchanger for heating this piping. If there is bacteria smaller in size than the pore size of the filter 8, that bacteria can be killed by the HTU 9. For example, the heating temperature at the HTU 9 may be the same as or may be different from the heating temperature at the heating apparatus 7 (for example, a predetermined temperature of 55°C or more and less than 100°C (for example, 60°C or more and 80°C or less, preferably 70°C or more and 80°C or less). The temperature holding time at the HTU 9 can, for example, be tens of milliseconds, hundreds of milliseconds, seconds, ten odd seconds, tens of seconds, or minutes (for example, within 2 minutes, preferably within 90 seconds, more preferably within 60 seconds). For example, the temperature of the water at the HTU 9 may be controlled by the control apparatus 13 by a closed loop.

A desired amount of water is run through the cooling apparatus 10 and sent to the aseptic tank 11. The water is cooled at the cooling apparatus 10 to for example ordinary temperature. The cooling apparatus 10 can, for example, be a heat exchanger and can cool the water sent to the aseptic tank 11 by a liquid running through the piping (for example, cold water or ordinary temperature water).

Next, the operation of the purification system 50 (purification method) will be explained.

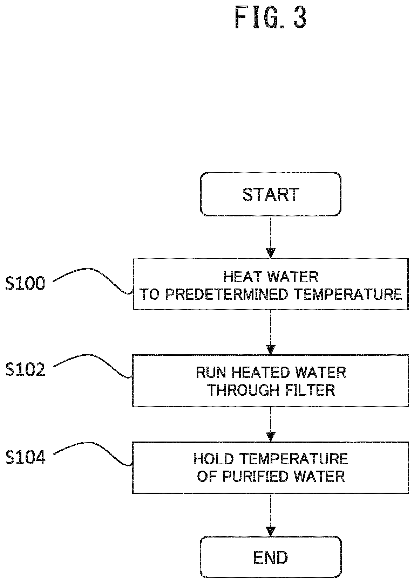

FIG. 3 is a flow chart showing a drinking water purification method according to an embodiment. Before the operation of FIG. 3, water passed through the raw water tank 2 to activated carbon filter 4 is stored in the balance tank 5. The water inside the balance tank 5 is sent by the pump 6 to the heating apparatus 7. The heating apparatus 7 is used to heat the water to a predetermined temperature of 55°C or more to less than 100°C for a predetermined time (step S100). Next, the heated water is passed through the filter 8 (step S102). Due to this, the water is purified. Next, the HTU 9 holds the purified water at a predetermined temperature for a predetermined time (step S104). Due to this, the water is further purified and the series of operations ends. After that, the water is cooled at the cooling apparatus 10, then is temporarily stored at the ACT 11 and is filled by the filter 12 in plastic bottles. The water filled by the filler 12 in the plastic bottles can include constituents contained in the raw water and not removed by the filter 8 (for example, mineral constituents etc.)

In the purification system 50 and purification method according to the above such 0embodiments, the filter 8 is used for purification of the water. At this time, by running water heated at the heating apparatus 7 to a predetermined temperature of 55°C or more and less than 100°C through the filter 8, it is possible to inhibit the formation of a biofilm at the filter 8 over a long period of time and possible to continue to purify the water for a constant period of time. At this time, since the water is heated to less than 100°C, it is possible to reduce the amount of emission of carbon dioxide compared with UHT sterilization.

Further, in the above embodiments, the purification system 50 further comprises an HTU for holding the water purified by the filter 8 for a predetermined period of time. Therefore, since the water is maintained at a high temperature (55°C or more and less than 100°C) downstream of the filter 8 for a while, the water downstream of the filter 8 can be further purified.

Embodiments of a water purification system and purification method were explained, but the present invention is not limited to the above embodiments. A person skilled in the art would understand that various modifications of the above embodiment are possible.

For example, in the above embodiments, the purification system 50 includes the HTU 9. However, in other embodiments, if the water can be sufficiently purified by the heating apparatus 7 and filter 8, the purification system 50 need not include the HTU 9.

### REFERENCE SIGNS LIST

- 7: heating apparatus
- 8: filter
- 9: holding tube unit (holding means)
- 50: purification system

## Claims

1. A purification system of drinking water in an aseptic filling system, wherein the purification system comprises:
a heating apparatus for heating water to a predetermined temperature of 55°C or more and less than 100°C; and
a filter for purifying the water heated by the heating apparatus.

2. The purification system according to claim 1, further comprising holding means for holding the temperature of the water purified by the filter for a predetermined time period.

3. A purification method of drinking water in an aseptic filling system, wherein the purification method comprises:
heating water to a predetermined temperature of 55°C or more and less than 100°C; and
running the heated water through a filter to purify the water.

4. The purification method according to claim 3, further comprising holding a temperature of the water purified by the filter for a predetermined period of time.
